# EUROPÄISCHE PATENTSCHRIFT

(11) **EP 0 404 140 B1**
(45) Veröffentlichungstag und Bekanntmachung des Hinweises auf die Patenterteilung: **20.03.1996**
(21) Anmeldenummer: 90111727.5
(22) Anmeldetag: 21.06.1990
(51) Int. Cl.: C07F 7/08, C07F 7/18, C09K 19/20

(54) **Silylierte Benzoesäurederivate II**
Silylated benzoic acid derivatives II
Dérivés de l'acide benzoique silylés II

(30) Priorität: 22.06.1989 DE 3920509; 24.04.1990 DE 4013045
(43) Veröffentlichungstag der Anmeldung: 27.12.1990
(73) Patentinhaber: Consortium für elektrochemische Industrie GmbH, D-81379 München (DE)
(72) Erfinder: Haas, Wolfgang, Dr., D-8034 Germering (DE); Häberle, Norman, Dr., D-8000 München 21 (DE); Winkler, Rainer, D-8000 München 83 (DE); Kreuzer, Franz-Heinrich, Dr., D-8033 Martinsried (DE)

(56) Entgegenhaltungen:
- EP-A- 0 322 703
- EP-A- 0 355 008
- POLYMER BULLETIN, Band 12, Nr. 5, November 1984, Seiten 383-388, Springer- Verlag, Heidelberg, DE; C. AQUILERA et al.: "Liquid crystal polymers. Thermotropic liquid crystalline bimesogenic molecules with highly flexible oligosiloxane spacer"
- CHEMICAL ABSTRACTS, Band 111, 1989, Seite 742, Zusammenfassung Nr. 205667e, Columbus, Ohio, US.

## Beschreibung

Die Erfindung betrifft neue, zum Teil flüssigkristalline silylierte Benzoesäurederivate, Verfahren zu deren Herstellung und deren Verwendung.

### Stand der Technik

Flüssigkristalline Verbindungen sind u.a. durch D. Demus, H. Demus und H. Zaschke (Flüssige Kristalle in Tabellen, 1974; D. Demus und H. Zaschke, Flüssige Kristalle in Tabellen II, 1984, VEB-Verlag Leipzig) bekannt. In US-A-4 358 391 (H. Finkelmann et al., Wacker-Chemie GmbH) sind flüssigkristalline Polymere mit Organopolysiloxanrückgrat und mesogenen Seitengruppen beschrieben. M. Petrzilka et al. (EP-A-122 389, F.Hoffmann-La Roche & Co.) beanspruchen Flüssigkristallkomponenten mit einer Alkenylkette, wobei an dieser Alkenylkette auch ein Benzoesäurederivat hängen kann. Diese Verbindungen weisen keine Organosiliciumgruppen auf. W. R. Young et al. (Molecular Crystals and Liquid Crystals, Vol. 13, Seite 305-321, 1971, Gordon and Breach Science Publishers) berichten u.a. über 4′-silylierte Benzimide von Benzoesäure-4-aminophenolester. Unten auf der Seite 309 erwähnen sie, daß diese Silicium enthaltenden Ester im Gegensatz zu vergleichbaren Substanzen keine mesomorphe Phase ausbilden, was auf die sterische Hinderung der Organosilylgruppe zurückgeführt wird. In 89JP-A 144 491 (offengelegt am 6.6. 1989, referiert in Chemical Abstracts, Vol. 111, 205 667e (1989) ) ist die Herstellung von (R)-4-(3-Pentamethyldisiloxypropyloxy)phenyl-4′-(1-methylheptyloxy)biphenyl-4-carboxylate beschrieben. Diese Verbindung ist jedoch nicht stabil und neigt dazu, die Si-gebundenen Propylengruppe abzuspalten. Weitere dort genannte Verbindungen sind nicht herstellbar, da sie nicht-existente organische Gruppen (-C₂H₇ und -C₆H₁₇) aufweisen.

### Aufgabe

Aufgabe der vorliegenden Erfindung war es, neue, vorzugsweise flüssigkristalline Verbindungen, insbesondere solche mit Organosiliciumgruppierungen zu synthetisieren. Eine weitere Aufgabe der vorliegenden Erfindung war es, flüssigkristalline Verbindungen herzustellen, welche mit anderen Flüssigkristallen gut mischbar, farblos und niederviskos sind. Ferner war es Aufgabe der vorliegenden Erfindung, Flüssigkristalline Verbindungen darzustellen, welche sich gut als Dielektrika in Anzeigevorrichtungen eignen und insbesondere mittels derer in solchen Vorrichtungen kurze Ansprechzeiten und hohe Kontraste bewirkt werden können.

### Beschreibung

Die vorstehend genannten Aufgaben werden durch die vorliegende Erfindung gelöst durch Verbindungen der Formel 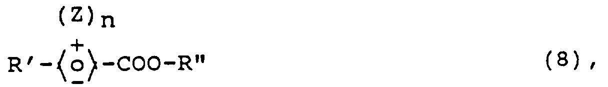 worin bedeuten
- **Z**: einen in 2-, 3-, 5- oder 6-Position an den Benzolring gebundener Rest, nämlich ein Halogenatom, eine Cyanogruppe, eine Hydroxylgruppe,
- **n**: 0, 1 oder 2,
- **R"**: einen Rest der Formel

R'"-[Si(R*)2](CH₂)_{y}-R""- (9),

worin bedeuten
**y** eine ganze Zahl von 4 bis 18,
**R'"** einen Rest der Formel R^{*}-[Si(R^{*})₂O]ᵥ-, wobei **v** eine ganze Zahl im Wert von 1 bis 10 ist,
**R**^{*****} gleiche oder verschiedene, gegebenenfalls substituierte, C₁- bis C₁₈-Kohlenwasserstoff- oder Kohlenwasserstoffoxyreste,
**R""** einen gegebenfalls über einen Phenylen- oder Biphenylenrest an die Carboxylgruppe gebundener Rest der Formel -E-, wobei
**E** ein zweibindiger Rest der Formel -O- oder -[Si(R^{*})₂]_{z}- ist, wobei ein Rest der Formel -O- nicht direkt an das Sauerstoffatom der Carboxylgruppe gebunden sein darf, und
**z** die Zahl 0 oder 1 bedeutet und der Rest
- **R'**: ein Halogenatom, einen Cyanorest, oder einen Rest der Bedeutung R^{*} bedeutet.
Vorzugsweise hat n den Wert 0 oder 1, insbesondere 0. Als Substituenten für die Reste R^{*} sind insbesondere Fluoroder Chloratome, Cyanoreste und Oxiranylreste bevorzugt.
Die vorliegende Erfindung betrifft auch und insbesondere Verbindungen der Formel 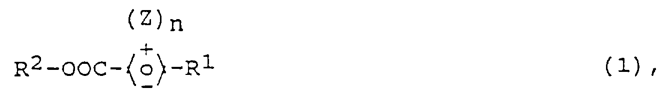 worin
- **R**: ein Rest der Formel (22) ist: 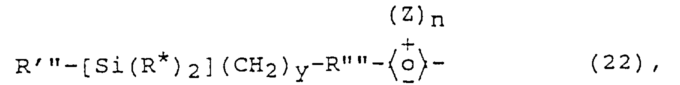 wobei in den Formeln (1) und (22) bedeuten
- **R**^{*****}: gleiche oder verschiedene, gegebenenfalls substituierte, C₁- bis C₁₈-Kohlenwasserstoff- oder Kohlenwasserstoffoxyreste,
- **R¹**: ein Halogenatom, einen Cyanorest, einen Rest der Bedeutung R^{**}, und
R'", R"" und y die zu Formel (8) bzw. (9) angegebenen Bedeutungen haben.
Unter den oben bezeichneten Verbindungen sind die flüssigkristallinen Verbindungen bevorzugt. Die vorliegende Erfindung umfaßt, soweit anwendbar, alle Enantiomere und Diastereomere der genannten Verbindungen einzeln und im Gemisch.

### Herstellungsverfahren

### Verfahren 1

Verbindungen der Formel (8) oder (1) können hergestellt werden durch Umsetzung von Verbindungen der Formel 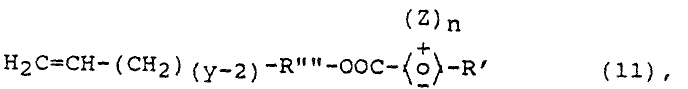 oder von Verbindungen der Formel 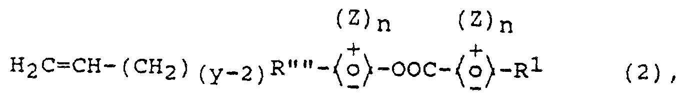 mit Verbindungen der Formel

R‴-[Si(R*)₂]-H (12),

in Gegenwart von Platinmetallen und/oder deren Verbindungen, wobei in den obigen Formeln (2), (11) und (12) n, y, Z, R′, R‴, R˝˝ und R* die zu Formel (8) und R¹ die zu Formel (1) angegebenen Bedeutungen besitzen.

Als Platinmetalle und/oder deren Verbindungen werden vorzugsweise Platin und/oder dessen Verbindungen eingesetzt. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-0cten gelöstem Platintetra-chlorid mit sec.-Butylamin, oder Ammonium-Platinkomplexe gemäß EP-B 110 370.

Platinkatalysator wird vorzugsweise in Mengen von 0,1 bis 50 Mol% bezogen auf die Molzahl derjenigen der Ausgangsstoffe der Formeln (11) bzw. (2), welche im Unterschuß oder in stöchiometrischer Menge vorliegen, eingesetzt.

Die Reaktion wird vorzugsweise bei Temperaturen von 0 °C bis 110 °C, vorzugsweise bei Drücken von 0,05 MPa bis 1,0 MPa durchgeführt.

Sollten die Verbindungen der Formeln (2), (11) bzw. (12) sehr reaktionsträge sein, kann auch bei höheren Temperaturen, höheren Drücken und in Anwesenheit von mehr Platinkatalysator gearbeitet werden.

Vorzugsweise wird die Reaktion in einem Lösungsmittel durchgeführt, welches insbesondere aprotisch sein sollte;Lösungsmittel oder Lösungsmittelgemische mit einem Siedepunkt bzw. Siedebereich von bis zu 160 °C, insbesondere von bis zu 120 °C bei jeweils 0,1 MPa (abs.) sind bevorzugt. Beispiele für Lösungsmittel sind Ester, wie Methylacetat, Ethylacetat, n-und iso-Propylacetat, n-, sec.- und t.-Butylacetat, Ethylformiat und Diethylcarbonat; Ether, wie Dioxan, Tetrahydrofuran, Diethylether, Di-n-propylether, Diisopropylether, Di-n-butylether, Ethylenglycolmonomethylether, Ethylenglycolmonoethylether, Diethylenglycoldimethylether und Anisol; chlorierte Kohlenwasserstoffe, wie Dichlormethan, Trichlormethan, Tetrachlormethan, 1,2-Dichlorethan, Trichlorethylen, Tetrachlorethylen und Chlorbenzol; Kohlenwasserstoffe, wie Pentan, n-Hexan, Hexan-Isomerengemische, Cyclohexan, Heptan, Oktan, Waschbenzin, Petrolether, Benzol, Toluol, Xylole; Ketone, wie Aceton, Methylethylketon, Methylisobutylketon; Schwefelkohlenstoff, Pyridin, Acetonitril und Nitrobenzol oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden . Die Reaktion kann auch in einem Lösungsmittelgemisch mit einer Mischungslücke ausgeführt werden, wobei in jeder der Mischphasen jeweils mindestens ein Reaktionspartner löslich ist.

Vorzugsweise werden die Verbindungen (11) bzw.(2) im Vergleich zu Verbindung der Formel (12) im erfindungsgemäßen Verfahren im Molverhältnis 1:2 bis 2:1, insbesondere von 1:1,1 bis 1,1:1 eingesetzt.

Die Verbindungen der Formeln (2), (11) und (12) sind teilweise käuflich. Sie lassen sich mit Hilfe bekannter Methoden aus bekannten Verbindungen herstellen (beispielsweise gemäß: Houben-Weyl-Müller, Methoden der Organischen Chemie, Georg Thieme Verlag, Stuttgart).

Die Einführung des Alkenylrestes in Verbindungen der Formel (2) gelingt beispielsweise durch Reaktion der entsprechenden Alkenylhalogenide mit metallorganischen Benzolderivaten, insbesondere mit den entsprechenden Grignard-Reagentien oder Organolithiumverbindungen, beispielsweise 4-Halogenphenylmagnesiumhalogenid. Üblicherweise erfolgt diese Umsetzung in einem gegen die eingesetzte metallorganische Verbindung inertem Lösungsmittel, wie Diethylether, Methyl-tert.-butylether, Tetrahydrofuran, 1,4-Dioxan, Acetonitril, Kohlenwasserstoffen und deren Gemischen, wie Toluol, Benzol, Hexanisomerengemisch. Sie wird vorzugsweise bei Temperaturen von -100 °C bis +110 °C, insbesondere bei Drücken von 0,09 bis 0,11 MPa (abs.) durchgeführt. Die Umsetzung kann unter Umständen durch Ultraschall beschleunigt werden. Gemäß Verfahren 1 wurden die Beispiele 1 und 2 durchgeführt.

### Verfahren 2

Verbindungen der Formel (8) oder (1) können auch hergestellt werden durch Umsetzung von Verbindungen der Formel 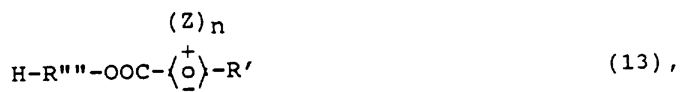 beziehungsweise Verbindungen der Formel 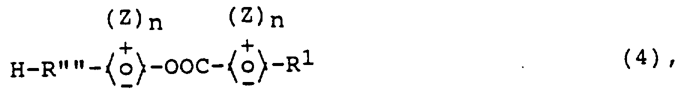 mit Verbindungen der Formel

R‴-[Si(R*)₂](CH₂)_{(y-2)}-CH=CH₂ (14),

in Gegenwart von Platinmetallen und/oder deren Verbindungen,
wobei in den obigen Formeln (13), (4) und (14) R′, R‴, R˝˝, R* und y die oben zu Formel (8) und R¹ die oben zu Formel (1) angegebenen Bedeutungen besitzen.

Als Platinmetalle und/oder deren Verbindungen können die zu Verfahren 1 genannten entsprechenden Metalle und Verbindungen eingesetzt werden.

Die bevorzugten Reaktionsbedingungen, wie Mengenverhältnisse, Drücke, Temperaturen und Lösungsmittel entsprechen ebenfalls denen von Verfahren 1.

Über die Zugänglichkeit der Ausgangsverbindungen (13) und (4) bzw. (14) gilt entsprechend das zu den Ausgangsverbindungen (2), (11) und (12) oben angeführte.

Als Ausgangsstoffe für Verbindungen der Formel (13) können auch die Dimethylsilylbenzoesäurechloride verwendet werden. Diese sind gemäß US-Patentanmeldung 2 291 88 (angemeldet am 8.8. 1988, entspricht EP-A-304 720, F.-H. Kreuzer et al., Consortium für elektrochemische Industrie GmbH) aus 1,4-Dihalogenbenzol, Umsetzung der entsprechenden Monogrignardverbindung mit Dimethylchlorsilan, erneute Umsetzung mit Magnesium und Umsetzung mit CO₂ und schließlich Umsetzung der so erhaltenen 4-Dimethylsilylbenzoesäure beispielsweise mit Thionylchlorid, erhältlich.

### Verfahren 3

Die Herstellung von Verbindungen der Formel (8) bzw. (1) kann auch erfolgen durch
**(a)** Umsetzung von Verbindungen der Formel 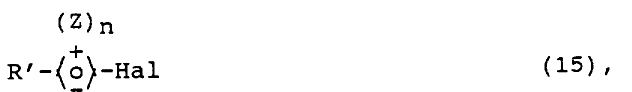 beziehungsweise 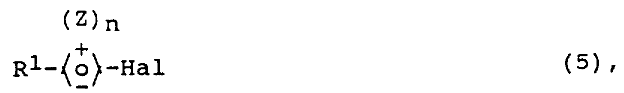 worin **Hal** ein Halogenatom, vorzugsweise Chlor oder Brom ist, mit Metall, vorzugsweise Magnesium, und Reaktion der so erhaltenen metallorganischen Verbindung mit
**(b)** Verbindungen der Formel

   R"-OOC-Hal (16),

   beziehungsweise

   R-OOC-Hal (7),

   worin Hal die für Formel (15) bzw. (5) angegebene Bedeutung hat,
   wobei in den oben genannten Formeln (15), (5), (16) und (7) die Reste R′ und R˝, Z und n die zu Formel (8) und R¹ und R die zu Formel (1) angegebenen Bedeutungen haben.

Die oben genannten Umsetzungen (a) und (b) finden vorzugsweise in einem aprotischen, im wesentlichen wasserfreien Lösungsmittel statt. Beispiele für solche Lösungsmittel sind die für das Verfahren 1 oben als geeignet genannten Lösungsmittel. Bei der Umsetzung mit Metall, vorzugsweise Magnesium, ist es überdies vorteilhaft, wenn das Lösungsmittel unter den dort gewählten Reaktionsbedingungen nicht mit dem Metall reagiert. Es sollten deshalb in diesem Schritt keine halogenierten Lösungsmittel eingesetzt werden.

### Verfahren 4

Verfahren 3 kann auch dadurch abgewandelt werden, daß in den Verbindungen der Formel (16) der Rest R˝ ersetzt ist durch einen Rest der Formel

H₂C=CH-(CH₂)_{(y-2)}-R˝˝- (18),

oder einen Rest der Formel

H-R˝˝- (19),

beziehungsweise in den Verbindungen der Formel (7) der Rest R ersetzt ist durch einen Rest der Formel 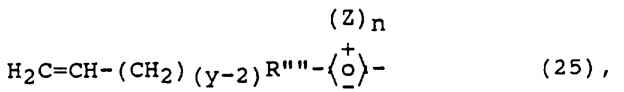 oder einen Rest der Formel 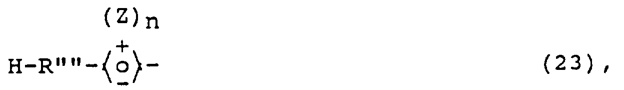 wobei in den obigen Formeln (18), (19), (23) und (25) R˝˝, Z, n und y die zu Formel (8) angengebenen Bedeutungen haben,
und das aus der Umsetzung erhaltene Produkt, das einen Rest der Formel (18) bzw. (25) enthält, anschließend gemäß Verfahren 1 und das aus der Umsetzung erhaltene Produkt, das einen Rest der Formel (19) oder (23) aufweist, anschließend gemäß dem Verfahren 2 weiterbehandelt wird.

### Verwendung

Die erfindungsgemäßen bzw. erfindungsgemäß herstellbaren flüssigkristallinen Verbindungen können in Anzeigevorrichtungen verwendet werden, besonders in Anzeigevorrichtungen, welche unter Verwendung von smektischen Flüssigkristall(mischungen) hergestellt werden. Dabei können reine Verbindungen der Formeln (8) oder (1), deren Mischungen und insbesondere Mischungen von flüssigkristallinen Verbindungen der Formel (8) und/oder (1) mit anderen Flüssigkristallen verwendet werden. Die erfindungsgemäßen Verbindungen eignen sich zur Herstellung von smektischen Gemischen, vor allem für Gemische, welche eine smektische C-Phase ausbilden können. Sie können aber auch als Zusätze zu nematischen oder cholesterischen Phasen Verwendung finden. Mit Hilfe von Verbindungen der Formel (8) bzw. (1) lassen sich sowohl flüssigkristalline Basismischungen herstellen als auch die Eigenschaften bereits fertiggestellter Basismischungen - wie beispielsweise die optische Anisotropie, die elektrische Anisotropie, die spontane Polarisation, die Viskosität, der Tiltwinkel, der Pitch und das Phasenverhalten -günstig verändern.

Der Anteil der erfindungsgemäßen flüssigkristallinen silylierten Benzoesäurederivate in Flüssigkristallmischungen kann je nach Verwendungszweck in breiten Grenzen variieren. Er kann beispielsweise von 1 Gewichtsprozent bis zu 100 Gewichtsprozent betragen.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C .
   Die Phasenbeschreibungen sind wie folgt abgekürzt dargestellt:
d) Die Zahlenwerte bedeuten Übergangstemperaturen, gemessen in °C;
e) Die Phasentypen sind wie folgt charakterisiert:
   - i :: isotrope Phase,
   - n :: nematische Phase,
   - ch :: cholesterische Phase,
   - sA :: smektische A-Phase,
   - sC :: smektische C-Phase,
   - sC* :: chirale smektische C-Phase,
   - sB :: smektische B-Phase,
   - s :: smektischer Zustand, dessen Typ nicht bestimmt wurde,
   - k :: kristallin,
   - G :: Glaszustand.
f) Phasenbeschreibungen in Klammern zeigen unterkühlbare Phasen an.

Die in den folgenden Beispielen verwendete Nomenklatur der chemischen Verbindungen entspricht nicht immer den Regeln der International Union of Pure and Applied Chemistry (IUPAC). So wird der in einigen Beispielen als "Pentamethyldisiloxyl-"-Gruppe angegebene Rest richtiger als Pentamethyldisiloxanyl-Gruppe bezeichnet.

### Beispiel 1

Zu einer Lösung von n-Heptyloxybenzoesäure-[4-(5-hexenyl-1-oxy)phenyl]ester und einer äquimolaren Menge an Pentamethyldisiloxan in Toluol wurde eine 0,5 %ige Dicyclopentadienylplatindichloridlösung in Dichlormethan zugegeben und die so erhaltene Mischung 5 Stunden lang unter Rückfluß gekocht. Nach vollständiger Hydrosilylierung wurde das Reaktionsgemisch mit Stickstoff gespült und das Lösungsmittel bei vermindertem Druck abdestilliert. Das Rohprodukt wurde zur Reinigung über Kieselgel chromatographiert. Erhalten wurde 4-Heptyloxybenzoesäure-(4-(1-pentamethyldisiloxylhexyloxy)phenylester), Phasen: k 42 sA 67i.

Analog wurden dargestellt:
4-(4-Propyl-trans-cyclohexylen)benzoesäure-(4-(1-pentamethyldisiloxylhexyloxy)phenylester, Phasen: k 57 sC 79 sA 139 i.
4-Butyloxybenzoesäure-(4-(6-pentamethyldisiloxanylhexyloxy)phenylester); Phasen: k 64 (sA 54-56) i
4-Heptyloxybenzoesäure-(4-(5-pentamethyldisiloxanylpentyloxy)phenylester): Phasen: k 27 sA 67 i
4-Heptyloxybenzoesäure-(4-(4-pentamethyldisiloxanylbutyloxy)phenylester); Phasen: k 57 (sA 49)i

## Patentansprüche

1. Verbindungen der Formel 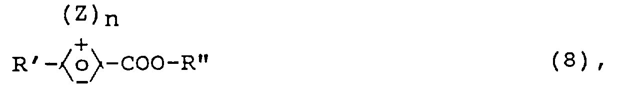 worin bedeuten
**Z** einen in 2-, 3-, 5- oder 6-Position an den Benzolring gebundener Rest, nämlich ein Halogenatom, eine Cyanogruppe, eine Hydroxylgruppe,
**n** 0, 1, oder 2,
**R"** einen Rest der Formel
R'"-[Si(R*)₂](CH₂)_{y}-R""- (9),
worin bedeuten
**y** eine ganze Zahl von 4 bis 18,
**R'"** einen Rest der Formel
R*-[Si(R^{*})₂O]ᵥ-,
wobei
**v** eine ganze Zahl im Wert von 1 bis 10 ist,
**R**^{*****} gleiche oder verschiedene, gegebenenfalls substituierte, C₁- bis C₁₈-Kohlenwasserstoff- oder Kohlenwasserstoffoxyreste,
**R""** einen gegebenfalls über einen Phenylen- oder Biphenylenrest an die Carboxylgruppe gebundener Rest der Formel -E-, wobei
**E** ein zweibindiger Rest der Formel -O- oder -[Si(R^{*})₂]_{z}- ist, wobei ein Rest der Formel -O- nicht direkt an das Sauerstoffatom der Carboxylgruppe gebunden sein darf, und
**z** die Zahl 0 oder 1 bedeutet und der Rest **R'** ein Halogenatom, einen Cyanorest oder einen Rest der Bedeutung R^{*} bedeutet.

2. Verbindungen der Formel 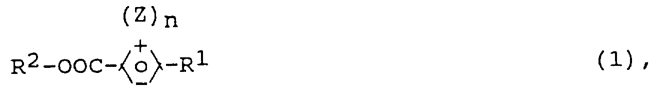 worin
**R** ein Rest der Formel (22) ist: 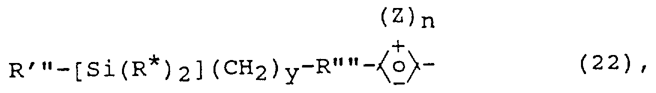 wobei in den Formeln (1) und (22) bedeuten
**R**^{*****} gleiche oder verschiedene, gegebenenfalls substituierte, C₁- bis C₁₈-Kohlenwasserstoff- oder Kohlenwasserstoffoxyreste,
**R¹** ein Halogenatom, einen Cyanorest, einen Cholesterylrest, einen Rest der Bedeutung R^{*}, ausgenommen n-Oktoxy- oder n-Decoxyreste, und
R'", R"", Z, n und y die in Anspruch 1 angegebenen Bedeutungen haben.

3. Verfahren zur Herstellung von Verbindungen der Formel (8) oder (1) gemäß Anspruch 1 oder 2 durch Umsetzung von Verbindungen der Formel 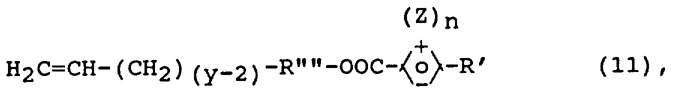 oder von Verbindungen der Formel 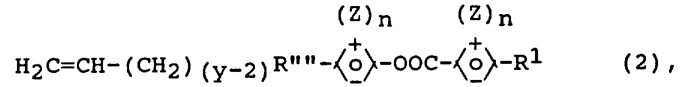 mit Verbindungen der Formel
R'"-[Si(R*)₂]-H (12),
in Gegenwart von Platinmetallen und/oder deren Verbindungen, wobei in den obigen Formeln (2), (11) und (12) n, y, Z, R', R'", R"" und R^{*} die in Anspruch 1 und R¹ die in Anspruch 2 angegebenen Bedeutungen besitzen.

4. Verfahren zur Herstellung von Verbindungen der Formel (8) oder (1) gemäß Anspruch 1 oder 2 durch Umsetzung von Verbindungen der Formel 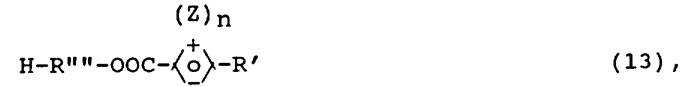 beziehungsweise Verbindungen der Formel 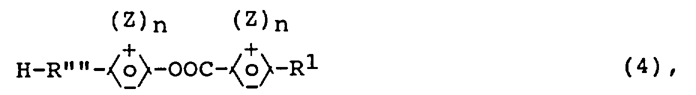 mit Verbindungen der Formel
R'"-[Si(R*)₂](CH₂)_{(y-2)}-CH=CH₂ (14),
in Gegenwart von Platinmetallen und/oder deren Verbindungen, wobei in den obigen Formeln (13), (4) und (14) R', R"', R"", R^{*}, Z, n und y die in Anspruch 1 und R¹ die in Anspruch 2 angegebenen Bedeutungen besitzen.

5. Verfahren zur Herstellung von Verbindungen der Formel (8) oder (1) gemäß Anspruch 1 oder 2 durch
**(a)** Umsetzung von Verbindungen der Formel 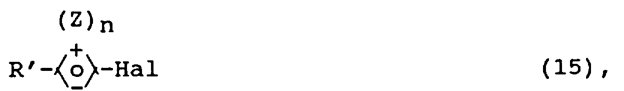 beziehungsweise 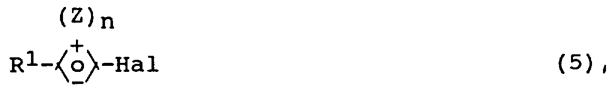 worin **Hal** ein Halogenatom, vorzugsweise Chlor oder Brom ist, mit Metall, vorzugsweise Magnesium, und Reaktion der so erhaltenen metallorganischen Verbindung mit
**(b)** Verbindungen der Formel
R"-OOC-Hal (16),
beziehungsweise
R-OOC-Hal (7),
worin Hal die für Formel (15) bzw. (5) angegebene Bedeutung hat,
wobei in den oben genannten Formeln (15), (5), (16) und (7) die Reste R' und R", Z und n die zu Formel (8) in Anspruch 1 und R¹ und R die zu Formel (1) in Anspruch 2 angegebenen Bedeutungen haben.

6. Verfahren nach Anspruch 5 mit der Maßgabe, daß in den Verbindungen der Formel (16) der Rest R" ersetzt ist durch einen Rest der Formel
H₂C=CH-(CH₂)_{(y-2)}-R""- (18),
oder einen Rest der Formel
H-R""- (19),
beziehungsweise in den Verbindungen der Formel (7) der Rest R ersetzt ist durch einen Rest der Formel 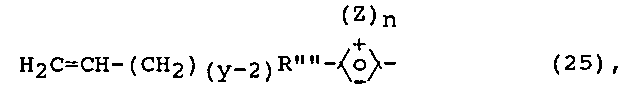 oder einen Rest der Formel 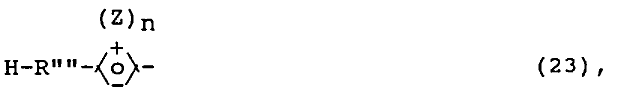 wobei in den obigen Formeln (18), (19), (23) und (25) R"", Z, n und y die in Anspruch 1 angengebenen Bedeutungen haben,
und das aus der Umsetzung erhaltene Produkt, das einen Rest der Formel (18) bzw. (25) enthält, anschließend gemäß dem Verfahren nach Anspruch 3 und das aus der Umsetzung erhaltene Produkt, das einen Rest der Formel (19) oder (23) aufweist, anschließend gemäß dem Verfahren nach Anspruch 4 behandelt wird.

7. Verwendung der flüssigkristallinen Verbindungen gemäß Anspruch 1 oder 2 oder der nach dem Verfahren gemäß Anspruch 3, 4, 5 oder 6 herstellbaren Verbindungen in Anzeigevorrichtungen.

## Claims

1. Compounds of the formula 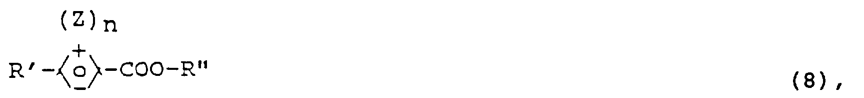
in which
**Z** is a radical bonded to the benzene ring in the 2-, 3-, 5- or 6-position, namely a halogen atom, a cyano group or a hydroxyl group,
**n** is 0, 1 or 2,
**R"** is a radical of the formula
R'''-[Si(R*)₂] (CH₂)_{y}-R"" (9),
in which
**y** is an integer from 4 to 18,
**R'''** is a radical of the formula R^{*}-[Si(R^{*})₂O]ᵥ-, where
**v** is an integer having a value of from 1 to 10,
**R**^{*****} is identical or different, optionally substituted C₁- to C₁₈-hydrocarbon or hydrocarbonoxy radicals,
**R""** is a radical of the formula -E- which is optionally bonded to the carboxyl group via a phenylene or biphenylene radical, where
**E** is a divalent radical of the formula -O- or -[Si(R^{*})₂]_{z}-, where a radical of the formula -O- must not be bonded directly to the oxygen atom of the carboxyl group, and
**Z** is the number 0 or 1
and the radical
**R'** is a halogen atom, a cyano radical or a radical as defined for R^{*}.

2. Compounds of the formula 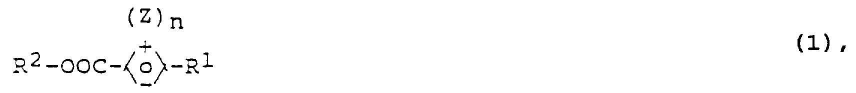 in which
R is a radical of the formula (22) 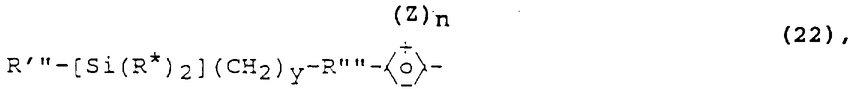 where, in the formulae (1) and (22),
R^{*} are identical or different, optionally substituted C₁- to C₁₈-hydrocarbon or hydrocarbonoxy radicals,
R¹ is a halogen atom, a cyano radical, a cholesteryl radical, or a radical as defined for R^{*}, with the exception of n-octoxy or n-decoxy radicals, and R''', R"", Z, n and y are as defined in Claim 1.

3. Process for the preparation of compounds of the formula (8) or (1) according to Claim 1 or 2, by reacting compounds of the formula 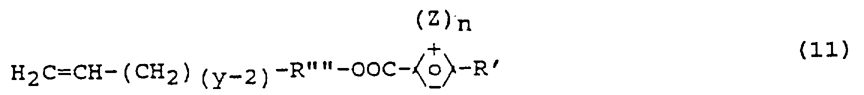 or compounds of the formula 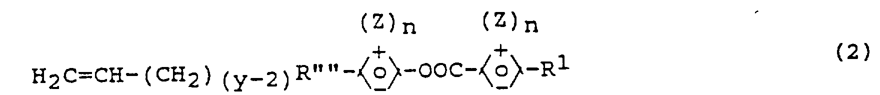 with compounds of the formula
R'''-[Si(R*)₂]-H (12)
in the presence of platinum group metals and/or compounds thereof, where, in the above formulae (2), (11) and (12), n, y, Z, R', R''', R"" and R^{*} are as defined in Claim 1, and R¹ is as defined in Claim 2.

4. Process for the preparation of compounds of the formula (8) or (1) according to Claims 1 or 2, by reacting compounds of the formula 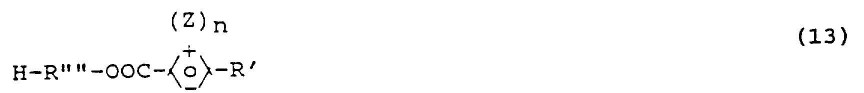 or compounds of the formula 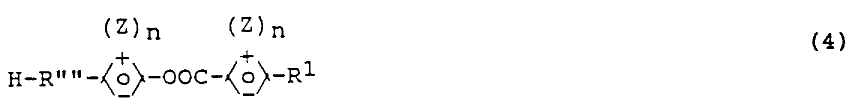 with compounds of the formula
R'''-[Si(R*)₂] (CH₂)_{(y-2)}-CH=CH₂ (14)
in the presence of platinum group metals and/or compounds thereof, where, in the above formulae (13), (4) and (14), R', R''', R"", R^{*}, Z, n and y are as defined in Claim 1 and R¹ is as defined in Claim 2.

5. Process for the preparation of compounds of the formula (8) or (1) according to Claim 1 or 2, by
**(a)** reacting compounds of the formula 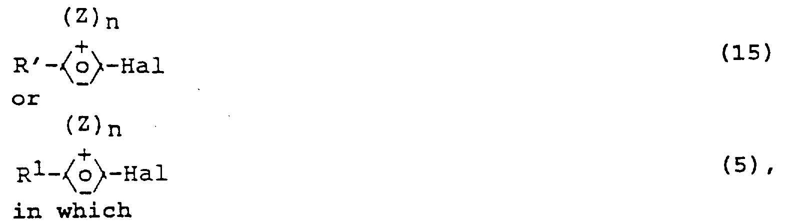 **Hal** is a halogen atom, preferably chlorine or bromine, with a metal, preferably magnesium, and reacting the organometallic compound thus obtained with
(b) compounds of the formula
R"-OOC-Hal (16)
or
R-OOC-Hal (7),
in which Hal is as defined in the formula (15) or (5),
where, in the abovementioned formulae (15), (5), (16) and (7), the radicals R' and R", Z and n are as defined in the formula (8) in Claim 1 and R¹ and R are as defined in the formula (1) in Claim 2.

6. Process according to Claim 5, with the proviso that, in the compounds of the formula (16), the radical R" has been replaced by a radical of the formula
H₂C=CH-(CH₂)_{(y-2)}-R""- (18)
or a radical of the formula
H-R""- (19)
or, in the compounds of the formula (7), the radical R has been replaced by a radical of the formula 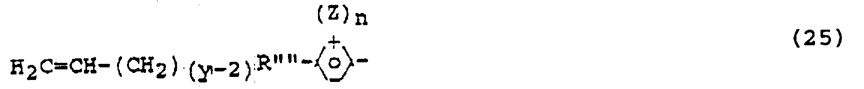 or a radical of the formula 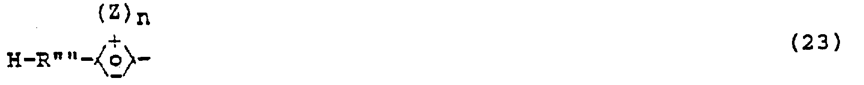 where, in the above formulae (18), (19), (23) and (25), R"", Z, n and y are as defined in Claim 1,
and the product obtained from the reaction which contains a radical of the formula (18) or (25) is subsequently treated as in the process according to Claim 3, and the product obtained from the reaction which contains a radical of the formula (19) or (23) is subsequently treated as in the process according to Claim 4.

7. Use of liquid-crystalline compounds according to Claim 1 or 2 or of the compounds which can be prepared by the process according to Claim 3, 4, 5 or 6 in display devices.

## Revendications

1. Composés de formule 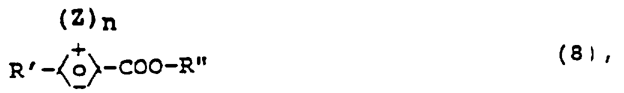 dans lesquels
Z représente un radical lié en position 2, 3, 5 ou 6 du cycle benzénique, à savoir, un atome d'halogène, un groupe cyano, un groupe hydroxyle,
n représente 0, 1 ou 2,
R" représente un radical de formule
R'"-[Si(R*)₂](CH₂)_{y}-R""- (9),
dans lequel
y représente un nombre entier de 4 à 18,
R'" représente un radical de formule
R*- [Si(R*)₂O]ᵥ-
dans lequel
v est un nombre entier de valeur 1 à 10,
R^{*} représente des radicaux hydrocarbure ou oxyhydrocarbure en C₁ à C₁₈, identiques ou différents, facultativement substitués,
R"" représente un radical de formule -E-, lié au groupe carboxyle facultativement par un radical phénylène ou biphényle, où
E est un radical à deux liaisons de formule -O- ou -[Si(R^{*})₂]_{z}-, où un radical de formule -O- ne peut pas être lié directement à l'atome d'oxygène du groupe carboxyle, et
z représente le nombre 0 ou 1 et
le radical R' représente un atome d'halogène, un radical cyano ou un radical de la signification de R^{*}.

2. Composés de formule 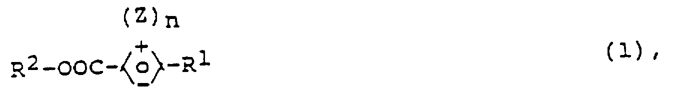 dans lesquels
R est un radical de formule (22) : 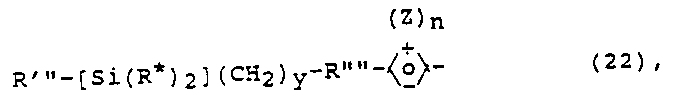 où, dans les formules (1) et (22),
R^{*} représente des radicaux hydrocarbure ou oxyhydrocarbure en C₁ à C₁₈, identiques ou différents, facultativement substitués,
R¹ représente un atome d'halogène, un radical cyano, un radical cholestéryle, un radical de la signification de R^{*}, à l'exclusion du radical n-octoxy ou n-décoxy, et
R'", R"", Z, n et y ont les significations données à la revendication 1.

3. Procédé de préparation des composés de formule (8) ou (1) suivant la revendication 1 ou 2, par réaction de composés de formule 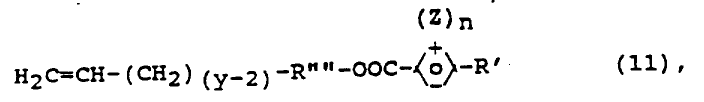 ou de composés de formule 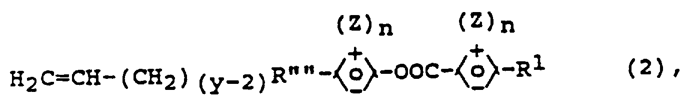 avec des composés de formule
R'"-[Si(R*)₂]-H (12),
en présence de platine métallique et/ou de ses composés, où dans les formules (2), (11) et (12) ci-dessus, n, y, Z, R', R'", R"" et R^{*} possèdent les significations données à la revendication 1 et R¹, celles données à la revendication 2.

4. Procédé de préparation des composés de formule (8) ou (1) suivant la revendication 1 ou 2, par réaction de composés de formule 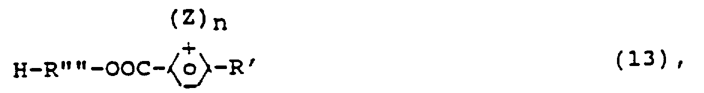 et respectivement, de composés de formule 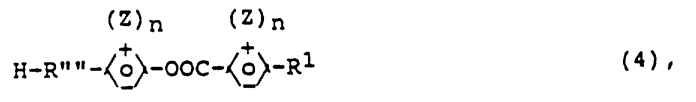 avec des composés de formule
R'"-[Si(R*)₂](CH₂)_{(y-2)}-CH=CH₂ (14),
en présence de platine métallique et/ou de ses composés, où dans les formules (13), (4) et (14) ci-dessus, R', R'", R"", R^{*}, Z, n et y possèdent les significations données à la revendication 1 et R¹, celles données à la revendication 2.

5. Procédé de préparation des composés de formule (8) ou (1) suivant la revendication 1 ou 2, par
(a) réaction de composés de formule 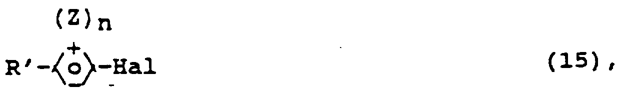 et respectivement, 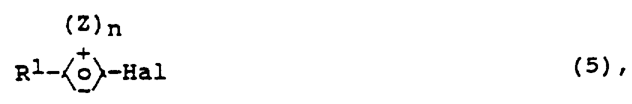 dans lesquels
Hal est un atome d'halogène, de préférence chlore ou brome,
avec un métal, de préférence le magnésium, et réaction de composé organométallique ainsi obtenu avec
(b) des composés de formule
R"-OOC-Hal (16),
et respectivement,
R-OOC-Hal (7),
dans lesquels Hal a la signification donnée pour la formule (15) et respectivement, (5),
où dans les formules (15), (5), (16) et (7) citées ci-dessus, les radicaux R' et R", Z et n ont les significations données à la revendication 1 pour la formule (8) et R¹ et R, celles données à la revendication 2 pour la formule (1).

6. Procédé suivant la revendication 5, avec la condition que, dans les composés de formule (16), le radical R" est remplacé par un radical de formule
H₂C=CH-(CH₂)_{(y-2)}-R""- (18),
ou un radical de formule
H-R""- (19),
et respectivement, dans les composés de formule (7), le radical R est remplacé par un radical de formule 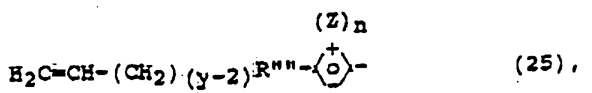 ou un radical de formule 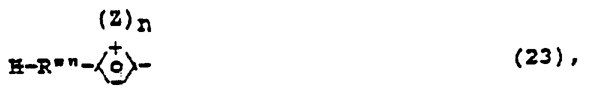 où dans les formules (18), (19), (23) et (25) ci-dessus, R"", Z, n et y ont les significations données à la revendication 1,
et que le produit obtenu par la réaction, qui contient un radical de formule (18) et respectivement (25), est traité ensuite suivant le procédé de la revendication 3 et que le produit obtenu par la réaction, qui présente un radical de formule (19) ou (23), est traité ensuite suivant le procédé de la revendication 4.

7. Utilisation des composés de type cristaux liquides suivant la revendication 1 ou 2 ou des composés pouvant être préparés par le procédé suivant la revendication 3, 4, 5 ou 6 dans des dispositifs d'affichage.
